# FASCICULE DE BREVET EUROPEEN

(11) **EP 0 520 891 B1**
(45) Date de publication et mention de la délivrance du brevet: **21.02.1996**
(21) Numéro de dépôt: 92401791.6
(22) Date de dépôt: 25.06.1992
(51) Int. Cl.: D06C 25/00

(54) **Procédé et installation automatique de finition par autocollage thermique d'une lisière surjetée d'un article rigide**
Verfahren und Vorrichtung zum kontinuierlichen Veredeln von mit Überwendlichnähten gewebekantensteifen Artikeln durch thermisches Selbstkleben
Method and apparatus for automatic finishing of a rigid article provided with an overlocked selvedge by thermal self adhesion

(30) Priorité: 25.06.1991 FR 9108333
(43) Date de publication de la demande: 30.12.1992
(73) Titulaire: T.A.D. TAPIS AUTO DIFFUSION (SARL), F-59100 Roubaix (FR)
(72) Inventeur: Vandamme, Philippe, F-59510 Hem (FR); Peschard, Philippe, F-59700 Marcq en Baroeul (FR)
(74) Mandataire: Hennion, Jean-Claude

(56) Documents cités:
- FR-A- 1 387 393
- FR-A- 2 185 710
- FR-A- 2 566 320
- GB-A- 1 379 635
- US-A- 4 755 242

## Description

La présente invention concerne la finition d'une lisière réalisée à l'aide d'un point de surjet sur tout le contour d'un article sensiblement rectangulaire, notamment d'un article rigide tel qu'un tapis-auto. Elle concerne plus particulièrement un procédé automatique de finition par autocollage thermique du fil de surjet, ledit fil étant dans une matière thermoplastique, et aussi une installation spécialement conçue pour la mise en oeuvre de ce procédé appliqué aux articles rigides tels que des tapis-auto

Dans le domaine de la finition d'articles par thermocollage, on connaît déjà, notamment par le document US.A.4 755 242, un procédé permettant de finir une lisière constituée d'un maillage de fils thermoplastiques en vue d'empêcher son effilochage. Ce procédé consiste à faire subir à ladite lisière un choc thermique prolongé, sur toute sa longueur, de manière à ce que les fils thermoplastiques se solidarisent en fondant. Pour mettre en oeuvre ce procédé, on dispose l'article, dont la lisière doit subir un choc thermique, sur un plan incliné où il est maintenu en position, puis on injecte au droit de la lisière de l'air chaud pendant un temps suffisamment long pour que les fils thermoplastiques fondent. Ce choc thermique peut s'accompagner d'une pression de la lisière. Ensuite on cesse de maintenir en position l'article et celui-ci est évacué en glissant le long du plan incliné. L'inconvénient de ce procédé est que toute la lisière de l'article doit être en matériau thermoplastique. De plus, le maintien en position de l'article pendant l'injection d'air chaud entraîne une perte de temps et le procédé ne peut s'appliquer à des articles en défilement continu.

On connaît également par le document FR 2 185 710, un procédé pour consolider les lisières de tapis sensiblement rectangulaires, en matière synthétique. Les poils synthétiques constitutifs du tapis s'étendant jusqu'aux lisières, on leur fait subir simultanément un choc thermique et une pression qui se prolonge après le choc thermique. Ce procéde présente les mêmes inconvénients que le premier procédé connu précédemment décrit, et nécessite forcément l'exercice d'une pression sur la lisière du tapis pendant au moins toute la durée du choc thermique.

Un autre procédé connu pour éviter l'effilochage de la lisière d'un article consiste à executer un surjet sur tout le contour de la lisière de l'article. Lorsque l'opération de surjetage est terminée, sur tout le contour du tapis, l'extrémité libre du fil de surjet dépasse de la lisière Il est nécessaire de bloquer cette extrémité libre, sinon en tirant sur le fil on découd le point de surjet. Le blocage peut être réalisé à l'aide d'un point d'arrêt, mais cela demande une surjeteuse appropriée ; il peut être réalisé en déposant un point de colle sur l'extrémité libre du fil de surjet, mais cela nécessite une manipulation complémentaire.

Le but visé par le demandeur est de proposer un procédé de finition, c'est à dire de blocage de l'extrémité libre du fil de surjet, qui soit automatique et qui ne demande pas de manipulation particulière, en particulier de la part de l'opérateur réalisant la lisière.

Ce but est parfaitement atteint par le procédé de l'invention. Il s'agit d'un procédé automatique de finition par injection d'air chaud de la lisière d'un article. De manière caractéristique, s'agissant d'un article sensiblement rectangulaire dont la lisière est surjetée à l'aide d'un fil de surjet en matière thermoplastique, le procédé consiste :
a. à déplacer l'article sur un support, longitudinalement, dans le sens du côté de l'article comportant l'extrémité libre du fil de surjet, et pendant le déplacement,
b. à injecter, au droit de la lisière à finir, de l'air porté à une température proche de la température de ramollissement de la matière thermoplastique,
c. et, immédiatement après l'injection d'air chaud, à écraser en continu toute ladite lisière.

Après injection d'air chaud et écrasement de la lisière, on constate que l'extrémité libre du fil de surjet, qui dépassait à la surface de la lisière, est en grande partie fondue et collée sur la lisière surjetée. Selon le procédé de l'invention, l'injection d'air chaud et l'écrasement sont réalisés tout le long de la lisière, bordant le côté de l'article. Contrairement aux deux premiers procédés connus précités, l'article ne doit pas être maintenu en position pendant que sa lisière subit un choc thermique. En effet, compte-tenu du choix de la température et du fait que sur la lisière proprement dite le fil thermoplastique est à l'état tendu , seule l'extrémité libre du fil de surjet doit être affectée par ce traitement. Pour la même raison, la pression exercée sur la lisière n'est pas simultanée au choc thermique, mais successive.

Le fil de surjet étant en multifilaments de polypropylène l'air injecté est porté à une température de l'ordre de 160-180 C.

C'est un autre objet de l'invention que de proposer une installation automatique avec injection d'air chaud spécialement conçue pour la mise en oeuvre du procédé précité appliqué à la finition d'articles rigides, notamment de tapis-auto.

Selon l'invention, l'installation comporte :
a. un support incliné, muni à sa partie inférieure d'une butée longitudinale apte à assurer le maintien de l'article sur ledit support,
b. un moyen rotatif d'écrasement, placé immédiatement en aval de l'injecteur,
c. et un système d'entraînement de l'article sur le support incliné, dans une direction perpendiculaire à l'inclinaison dudit support.

De plus l'injecteur est positionné en regard du support en sorte que l'air chaud soit injecté au niveau de la lisière à finir lors du déplacement de l'article sur le support.

Selon une version préférée, le support incliné est constitué d'un ensemble de rouleaux parallèles, juxtaposés et entraînés en rotation. De la sorte c'est le support qui fait lui-même office de système d'entraînement de l'article.

De préférence la butée longitudinale, à la partie inférieure du support incliné, est constituée de roulettes libres en rotation. Ainsi la butée ne provoque pas de freinage de l'article lors de son déplacement sur le support.

Le moyen rotatif d'écrasement est par exemple constitué d'un cylindre, assorti d'un moyen de pression notamment d'un ressort et prenant appui sur le support incliné. Lors du déplacement de l'article sur le support, le cylindre d'écrasement est soulevé et écrase l'article tout le long de la lisière. De préférence, lorsque le support incliné est constitué d'un ensemble de rouleaux, le cylindre d'écrasement est situé en regard d'un des rouleaux entraînés.

Avantageusement l'installation de finition précitée est mise en place dans un atelier comportant plusieurs postes de surjetage. Dans ce cas, selon l'invention, elle comporte des moyens de transport et de présentation des articles provenant de chaque poste de surjetage jusqu'au support incliné. Selon le demandeur, il est possible d'alimenter une seule installation de finition avec les articles provenant d'au moins six postes de surjetage.

Selon un mode de réalisation, les moyens de transport et de présentation consistent en un second ensemble de rouleaux parallèles et juxtaposés, entraînés en rotation, ayant la même inclinaison que le support incliné et étant dans le prolongement amont de celui-ci. De préférence le support étant constitué de rouleaux inclinés, les deux ensembles de rouleaux sont entraînés par les mêmes moyens moteurs.

Avantageusement l'installation comporte un bac de réception des articles finis et un moyen d'entraînement, à grande vitesse, de l'article fini placé après le moyen rotatif d'écrasement et apte à projeter l'article fini dans le bac de réception.

L'invention sera mieux comprise à la lecture de la description qui va être faite d' un exemple d'installation automatique de finition par autocollage thermique de la lisière surjetée de tapis-auto provenant de six postes de surjetage, illustrée par le dessin annexé dans lequel :

La figure 1 est une vue schématique de dessus de l'installation et des six postes de surjetage.

La figure 2 est une vue schématique en coupe de l'installation selon la ligne AA′ de la figure 1.

La figure 3 est une vue schématique en coupe de l'installation selon le signe BB′ de la figure 1.

L'installation 1 est destinée à la finition de tapis-auto 2 provenant de six postes 3 de surjetage.

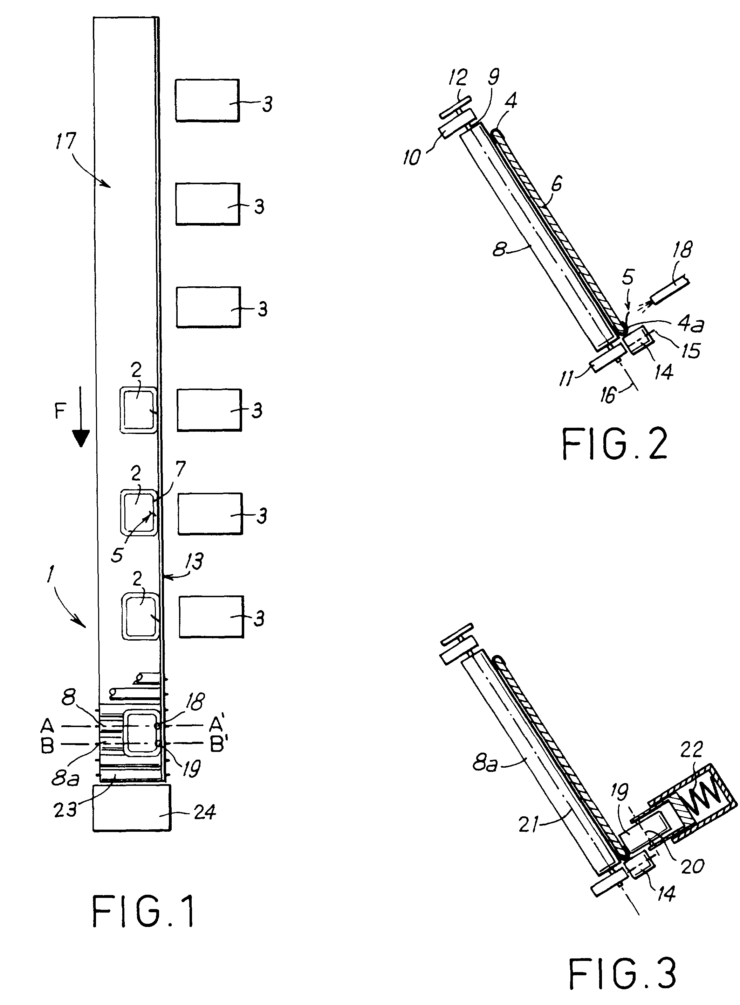

Un tapis-auto est un accessoire que l'on place sous les pieds du conducteur ou du passager d'un véhicule automobile pour éviter l'usure du revêtement du sol dudit véhicule. Il s'agit généralement d'une moquette 6 de forme rectangulaire, comme cela est illustré sur la figure 1., ou bien présentant des découpes adaptées au type de véhicule dans lequel il est placé. La moquette 6 est bordée sur tout son pourtour d'une lisière 4, qui est dans le cas présent réalisée au poste de surjetage 3 et qui est constituée par couture d'un point de surjet à l'aide d'un fil multifilamentaire de polypropylène.

L'installation de finition a pour but de bloquer par autocollage thermique l'extrémité libre 5 du fil de surjet, qui dépasse de la lisière une fois que l'opérateur, au poste 3, a fait le tour de la moquette 3. Selon le procédé de l'invention, l'opérateur doit faire en sorte de commencer et donc de finir la lisière 4 le long d'un des grands côtés 7 du tapis 2 rectangulaire.

Le long des six postes 3 de surjeteuse s'étend un support 17 de déplacement des tapis 2, sur lequel chaque opérateur dépose le tapis dont il vient de terminer la lisière. Il s'agit d'un ensemble de rouleaux 8 identiques, parallèles et juxtaposés, ayant par rapport à l'horizontale une inclinaison comprise entre 30° et 60°. L'axe 9 de chaque rouleau 8 est monté sur des paliers 10, 11 solidaires d'un bâti non représenté, et porte à une extrémité un système d'entraînement 12 par exemple une roue dentée coopérant avec une chaîne mue par un moteur.

Une butée longitudinale 13 est disposée sous l'alignement des rouleaux inclinés 8. Cette butée 13 est constituée par une succession de galets 14 libres en rotation autour de leur axe 15. Le plan formé par les axes 15 des galets 14 est sensiblement perpendiculaire au plan 16 formé par les axes de rotation des rouleaux 8.

Le dispositif de traitement thermique de finition est situé vers l'extrémité aval du support 17 de déplacement, dans le sens d'avancement des tapis 2 sur les rouleaux 8. Ce dispositif comprend une buse d'injection 18, alimentée avec de l'air chauffé à 160-180° C. Cette buse 18 est dirigée vers la partie inférieure des rouleaux 8, juste au-dessus des galets 14. Immédiatement en aval de la buse 18 d'injection, à une distance de 5 à 10 cm environ, on trouve un cylindre presseur 19, dont l'axe de rotation 20 est parallèle à l'axe 21 du rouleau 8a en vis à vis duquel il est placé. L'axe 20 du cylindre presseur 19 est solidaire d'un ressort de pression 22 grâce à l'action duquel il est repoussé vers le rouleau 8a.

Le rouleau de sortie 23 du support 17 de déplacement est entraîné, indépendamment des autres rouleaux 8, à une vitesse supérieure à la vitesse de ces derniers.

Un bac de réception 24 est placé juste derrière ledit rouleau de sortie 23.

Le fonctionnement de l'installation est le suivant. Lorsqu'un opérateur a terminé la lisière surjetée sur tout le contour de la moquette 6, avec le fil d'extrémité 5 du surjet se trouvant sur l'un des grands côtés 7 du tapis 2, il dépose le tapis 2 sur le support 17 de déplacement. En pratique, l'opérateur lance le tapis 2 qui de lui-même glisse le long des rouleaux et se positionne contre la butée longitudinale 13 sous l'effet de son propre poids et de l'inclinaison des rouleaux. L'opérateur doit seulement veiller à ce que le côté 7 avec l'extrémité de fil de surjet soit bien en position longitudinale inférieure.

Le tapis 2 est entraîné dans le sens de la flèche F par les rouleaux 8. La face envers du tapis 2 est généralement revêtue d'une enduction caoutchouteuse qui a un coefficient de frottement suffisant pour permettre cet entraînement sans glissement.

Lorsque le tapis 2 arrive vers l'extrémité aval du support 17, toute la lisière inférieure 4a située le long du côté 7 est balayée par le jet d'air chaud provenant de la buse 18. De ce fait, l'extrémité libre 5 du fil de surjet qui dépasse de la lisière, subit un choc thermique et le polypropylène constitutif dudit fil est porté à fondre.

Après le passage sous la buse 18, le bord avant du tapis vient en contact avec le cylindre presseur 19 et le soulève. On comprend que les forces mises en jeu dans le déplacement du tapis 2 sont supérieures à la résistance exercée par le ressort de pression 22. Ainsi le cylindre presseur 19 écrase, pendant le déplacement du tapis 2, toute la lisière 4a située le long du côté 7.

Lorsque l'extrémité libre 5 du fil du surjet arrive au niveau du cylindre presseur 19, le polypropylène n'a pas eu le temps de se refroidir, il est encore à l'état quasi-fondu . La pression exercée par le cylindre 19 l'écrase contre la lisière 4a, ce qui entraîne un autocollage du popypropylène contre les fils de la même matière constituant la lisière 4a.

Arrivé sur le rouleau de sortie 23, le tapis est projeté vers le bac 24 où il est empilé sur les tapis 2 déjà accumulés.

L'invention n'est pas limitée au mode de réalisation qui a été décrit à titre d'exemple non exhaustif.

En particulier, il est possible de prévoir d'autres systèmes de convoyage et d'alimentation du tapis depuis les postes de surjetage jusqu'à l'installation de finition proprement dite, avec ou sans stockage intermédiaire.

## Revendications

1. Procédé automatique de finition de la lisière (4) d'un article, consistant à placer l'article sur un support, à injecter, au droit de la lisière à finir, de l'air chaud et à écraser ladite lisière caractérisé en ce que , s'agissant d'un article sensiblement rectangulaire dont la lisière est surjetée à l'aide d'un fil de surjet en matière thermoplastique, il consiste à déplacer l'article (2) sur ledit support (17), longitudinalement, dans le sens du côté de l'article comportant l'extrémité libre du fil de surjet, et pendant ce déplacement, à réaliser dans un premier temps l'injection d'air chaud à une température proche de la température de ramollissement de la matière thermoplastique et, dans un second temps , immédiatement après l'injection d'air chaud , à écraser ladite lisière en continu.

2. Procédé selon la revendication 1 caractérisé en ce que le fil de surjet étant en multifilaments de polypropylène, l'air injecté est porté à une température de l'ordre de 160-180°C.

3. Installation automatique , susceptible de mettre en oeuvre le procédé de la revendication 1, pour la finition d'articles rigides , notamment de tapis-auto, l'installation comprend un support (17) incliné, muni à sa partie inférieure d'une butée (13) longitudinale apte à assurer le maintien de l'article (2) sur ledit support (17), et un injecteur d'air chaud (18) positionné en regard du support (17) en sorte que l'air chaud soit injecté au niveau de la lisière (4) à finir, caractérisée en ce qu'elle comporte en outre un moyen rotatif d'écrasement (19) , placé immédiatement en aval de l'injecteur (18), et un système d'entraînement de l'article sur le support (17) incliné, dans une direction perpendiculaire à l'inclinaison dudit support.

4. Installation selon la revendication 3 caractérisée en ce que le support (17) incliné est constitué d'un ensemble de rouleaux (8) parallèles, juxtaposés et entraînés en rotation.

5. Installation selon la revendication 3 caractérisée en ce que la butée (13) longitudinale , à la partie inférieure du support incliné est constituée de roulettes (14) libres en rotation.

6. Installation selon l'une des revendications 3 ou 4 caractérisée en ce que le moyen rotatif d'écrasement est constitué d'un cylindre (19), assorti d'un moyen de pression, notamment d'un ressort (17) apte à repousser ledit cylindre (19) vers le support (17) sur lequel il prend appui en l'absence d'articles (2).

7. Installation selon la revendication 3 caractérisée en ce qu'elle comporte des moyens de transport et de présentation des articles (2) provenant de plusieurs postes de surjetage (3) jusqu'au support incliné (17).

8. Installation selon la revendication 7 selon les moyens de transport et de présentation consistent en un second ensemble de rouleaux parallèles et juxtaposés , entraînés en rotation, ayant la même inclinaison que le support incliné et étant dans le prolongement amont de celui-ci.

9. Installation selon la revendication 3 caractérisée en ce qu'elle comporte un bac de réception (24) des articles finis et un moyen d'entraînement (23), à grande vitesse, de l'article fini placé après le moyen rotatif d'écrasement et apte à projeter l'article fini dans le bac de réception.

## Patentansprüche

1. Automatisches Verfahren zur Endbearbeitung der Kante (4) eines Gegenstands, welches im Auflegen des Gegenstands auf eine Auflage, dem Aufblasen von heißer Luft senkrecht zu der endzubearbeitenden Kante und dem Pressen dieser Kante besteht, dadurch **gekennzeichnet**, daß es sich um einen im wesentlichen rechteckigen Gegenstand handelt, dessen Kante mit einem Überwendlichfaden aus einem thermoplastischen Material überwendlich genäht ist, und daß der Gegenstand (2) der Länge nach entlang der Seite des Gegenstands, an der sich das freie Ende des Überwendlichfadens befindet, auf der Auflage (17) transportiert wird und während dieses Transports in einem ersten Arbeitstakt heiße Luft mit einer Temperatur, die etwa der Erweichungstemperatur des thermoplastischen Materials entspricht, aufgeblasen wird und in einem zweiten Arbeitstakt unmittelbar nach der Zufuhr der heißen Luft die Kante kontinuierlich gepreßt wird.

2. Verfahren nach Anspruch 1, dadurch gekennzeichnet, daß der Überwendlichfaden ein Multifil aus Polypropylen ist und die aufgeblasene Luft eine Temperatur in der Größenordnung von 160 bis 180 °C aufweist.

3. Automatische Vorrichtung zur Durchführung des Verfahrens nach Anspruch 1 zur Endbearbeitung von unelastischen Gegenständen, insbesondere Fußmatten für Kraftfahrzeuge, die eine geneigte Auflage (17) und eine Düse (18) für heiße Luft enthält, wobei am unteren Teil der Auflage (17) ein Längsanschlag (13) vorgesehen ist, der den Gegenstand (2) auf der Auflage (17) zu halten vermag, und die Düse (18) in Bezug auf die Auflage (17) so positioniert ist, daß die heiße Luft auf Höhe der endzubearbeitenden Kante (4) aufgeblasen wird, dadurch **gekennzeichnet**, daß sie ferner eine drehbare Vorrichtung (19) zur Druckverformung, die unmittelbar hinter der Düse (18) angeordnet ist, und ein Transportsystem zum Transport des Gegenstands auf der geneigten Auflage (17) in einer Richtung senkrecht zur Neigung der Auflage aufweist.

4. Vorrichtung nach Anspruch 3, dadurch gekennzeichnet, daß die geneigte Auflage (17) aus einer Einheit von parallelen, nebeneinanderliegenden, angetriebenen Rollen (8) besteht.

5. Vorrichtung nach Anspruch 3, dadurch gekennzeichnet, daß der Längsanschlag (13) an der unteren Seite der geneigten Auflage aus frei drehbaren Walzen (14) besteht.

6. Vorrichtung nach Anspruch 3 oder 4, dadurch gekennzeichnet, daß die drehbare Vorrichtung zur Druckverformung aus einem Zylinder (19) und einer daran angepaßten Druckeinrichtung, insbesondere einer Feder (22) besteht, die den Zylinder (19) gegen die Auflage (17) drückt, auf der er, wenn sich keine Gegenstände (2) auf der Auflage befinden, anliegt.

7. Vorrichtung nach Anspruch 3, dadurch gekennzeichnet, daß sie eine Einrichtung zum Transport und zum Bereitstellen von Gegenständen (2) an der geneigten Auflage (17) aufweist, wenn mehrere Stationen für das Überwendlichnähen (3) vorhanden sind.

8. Vorrichtung nach Anspruch 7, wobei die Einrichtung zum Transport und zum Bereitstellen aus einer zweiten Einheit paralleler, nebeneinanderliegender, angetriebener Rollen besteht, welche die gleiche Neigung wie die geneigte Auflage aufweisen und sich oberhalb davon in deren Verlängerung befinden.

9. Vorrichtung nach Anspruch 3, dadurch gekennzeichnet, daß sie einen Aufnahmebehälter (24) für die endbearbeiteten Gegenstände und eine Transporteinrichtung (23) zum Hochgeschwindigkeitstransport des bearbeiteten Gegenstands aufweist, die hinter der rotierenden Einrichtung zur Druckverformung angeordnet ist und den endbearbeiteten Gegenstand in den Aufnahmebehälter befördern kann.

## Claims

1. Automatic method for finishing the selvedge (4) of an article, consisting in placing the article on a support, in injecting hot air in line with the selvedge to be finished, and in crushing the said selvedge, characterized in that, when a substantially rectangular article is involved, the selvedge of which is overlocked using an overlocking thread made of thermoplastic, it consists in moving the article (2) along the said support (17) longitudinally in the direction of the side of the article which includes the free end of the overlocking thread, and during this movement, firstly in injecting hot air at a temperature close to the softening temperature of the thermoplastic and secondly, immediately after the injection of the hot air, in continuously crushing the said selvedge.

2. Method according to Claim 1, characterized in that since the overlocking thread is a polypropylene multifilament thread, the air injected is brought up to a temperature of the order of 160-180°C.

3. Automatic installation capable of implementing the method of Claim 1, for finishing rigid articles, especially car mats, the installation comprises an inclined support (17) equipped at its lower part with a longitudinal stop (13) capable of keeping the article (2) on the said support (17), and a hot air injector (18) positioned facing the support (17) so that the hot air is injected in the region of the selvedge (4) to be finished, the installation being characterized in that it further includes a rotary crushing means (19) placed immediately downstream of the injector (18) and a system for driving the article along the inclined support (17) in a direction perpendicular to the inclination of the said support.

4. Installation according to Claim 3, characterized in that the inclined support (17) consists of a set of parallel juxtaposed rollers (8) driven in rotation.

5. Installation according to Claim 3, characterized in that the longitudinal stop (13) at the lower part of the inclined support consists of freely rotating small rollers (14).

6. Installation according to one of Claims 3 and 4, characterized in that the rotary crushing means consists of a cylinder (19) combined with a pressing means, especially a spring (22) capable of pushing the said cylinder (19) back towards the support (17) on which it rests in the absence of articles (2).

7. Installation according to Claim 3, characterized in that it includes means for transporting and offering up articles (2) coming from several overlocking stations (3) to the inclined support (17).

8. Installation according to Claim 7, according to which the conveying and offering-up means consist of a second set of parallel juxtaposed rollers driven in rotation having the same inclination as the inclined support and being in the upstream extension thereof.

9. Installation according to Claim 3, characterized in that it includes a tray (24) for receiving the finished articles and a means (23) for driving the finished article at high speed, this means being placed after the rotary crushing means and capable of throwing the finished article into the receiving tray.
